# EUROPEAN PATENT APPLICATION

(11) **EP 4 545 328 A1**
(43) Date of publication of application: **30.04.2025**
(21) Application number: 23830229.3
(22) Date of filing: 27.06.2023
(51) Int. Cl.: B60K 1/04, B60L 53/80

(54) **QUICK-CHANGE SUPPORT FOR ELECTRIC VEHICLE, AND ELECTRIC VEHICLE INCLUDING SAME**

(30) Priority: 27.06.2022 CN 202210743812
(71) Applicant: Aulton New Energy Automobile Technology Co., Ltd., Guangzhou, Guangdong 510700 (CN); Shanghai Dianba New Energy Technology Co., Ltd., Shanghai 201306 (CN)
(72) Inventor: ZHANG, Jianping, Shanghai 201306 (CN); QIU, Danliang, Shanghai 201306 (CN); LIU, Meng, Shanghai 201306 (CN)
(74) Representative: Huang, Liwei
(86) International application number: PCT/CN2023/102663
(87) International publication number: WO 2024/002052

(57) **Abstract**

Disclosed are a quick-swap support for an electric vehicle, and an electric vehicle including same. The quick-change support comprises: a support body (10), which is fixed to a vehicle beam (2); a primary locking mechanism (20), which is arranged on the support body (10), wherein the primary locking mechanism (20) has a primary cavity (201); and a secondary locking mechanism (30), which is arranged on the support body (10) and spaced apart from the primary locking mechanism (20), wherein the secondary locking mechanism (30) has a secondary cavity (301). In a locked state, a primary locking member (3) is locked in the primary cavity (201), and a secondary locking member (4) is limited in the secondary cavity (301). In the process of switching from the locked state to an unlocked state, the secondary locking mechanism (30) releases the limitation on the secondary locking member (4) before the primary locking mechanism (20) unlocks the primary locking member (3). In the process of switching from the unlocked state to the locked state, the secondary locking mechanism (30) limits the secondary locking member (4), and at the same time, the primary locking mechanism (20) locks the primary locking member (3). By means of the secondary locking mechanism, a battery pack is not prone to coming off. When locking is required, the operation is convenient, which is conducive to improving the installation efficiency and reliability of the battery pack.

## Description

The present invention claims priority to Chinese Patent Application No. 202210743812X filed on June 27, 2022, the entire contents of which are incorporated herein by reference.

### TECHNICAL FIELD

The present invention relates to the field of battery swap of electric vehicles, and in particular to a quick-swap support for an electric vehicle, and an electric vehicle including same.

### BACKGROUND

At present, a battery pack is generally mounted on an electric vehicle in a fixed mode or a swappable mode. It is common practice to secure a fixed battery pack to the vehicle and charge the vehicle directly. Typically, the swappable battery pack is mounted movably and can be swapped with a new battery pack after detached whenever necessary. When the battery pack is mounted movably, a locking shaft on the battery pack is locked to a locking mechanism at a bottom of the electric vehicle.

Locking or unlocking the battery pack is inescapable in a process of swapping with the new battery pack. In general, locking members (usually locking shafts) are mounted at a left side and a right side of the battery pack. A quick-swap support assembly that is formed by fixing the locking mechanism to a quick-swap support is mounted on a chassis of the electric vehicle. The locking shafts match the locking mechanism, so as to lock the battery pack.

For locking cooperation between an existing lock and the locking mechanism, a bolt will always tightly abut against the locking shaft, preventing the locking shaft from moving in a locking groove. Thus, the locking shaft is hindered from being separated from the locking groove of a lock base. But unstable locking reliability of the bolt in use and failure of the locking mechanism are probably caused due to shake of the electric vehicle in a driving process and a heavy battery pack.

### SUMMARY

The technical problem to be solved by the present invention is to provide a quick-swap support for an electric vehicle, and an electric vehicle including same, so as to overcome the defects of unstable locking reliability of a bolt in use and failure of a locking mechanism in the prior art.

The present invention solves the above technical problem through the technical solution as follows:

A quick-swap support for an electric vehicle is configured to be fixed to a vehicle beam of the electric vehicle and mount a battery pack, includes:
a support body, fixed to the vehicle beam;
a primary locking mechanism, arranged on the support body and provided with a primary cavity; and
a secondary locking mechanism, arranged on the support body and spaced apart from the primary locking mechanism, and provided with a secondary cavity;
wherein when the battery pack is in a locked state, a primary locking member is locked in the primary cavity by the primary locking mechanism, and a secondary locking member is limited in the secondary cavity;
wherein in a process that the battery pack is switched from the locked state to an unlocked state, limitation to the secondary locking member is released by the secondary locking mechanism before locking on the primary locking member is released by the primary locking mechanism; and
wherein in a process that the battery pack is switched from the unlocked state to the locked state, limitation to the secondary locking member by the secondary locking mechanism and locking on the primary locking member by the primary locking mechanism are synchronously performed.

In the embodiment, the secondary locking mechanism only limits the secondary locking member, instead of locking the secondary locking member. In a case of failure of the primary locking mechanism, the secondary locking mechanism takes a protection and support role for the battery pack, so as to prevent the battery pack from falling off. Accordingly, locking reliability of a bolt in a use process is improved, and the battery pack is well protected. In a process that the battery pack needs to be switched from the locked state to the unlocked state, under the action of an unlocking mechanism, limitation to the secondary locking member may be released by the secondary locking mechanism at first, and then locking on the primary locking member is released by the primary locking mechanism. Thus, the secondary locking mechanism does not affect an unlocking operation by the primary locking mechanism, so that unlocking is smooth and reliable. In a process that the battery pack is switched from the unlocked state to the locked state, locking on the primary locking member by the primary locking mechanism and limitation to the secondary locking member by the secondary locking mechanism are synchronous. Thus, an operation is convenient, and mounting efficiency and mounting reliability of the battery pack are improved.

Preferably, the primary locking mechanism includes a primary lock link, a primary lock base, and a primary bolt, the primary lock base is mounted on the support body and provided with a primary opening and the primary cavity extending from the primary opening, the primary opening is configured to allow the primary locking member to enter into the primary cavity, and the primary lock link is configured to drive the primary bolt to move relative to the primary lock base under the action of an external force, so that the primary bolt switches between the locked state and the unlocked state relative to the primary lock base;
wherein the secondary locking mechanism includes a secondary lock link, a secondary lock base, and a secondary bolt, the secondary lock base is mounted on the support body and provided with a secondary opening and the secondary cavity extending from the secondary opening, the secondary opening is configured to allow the secondary locking member to enter into the secondary cavity, and the secondary lock link is configured to drive the secondary bolt to move relative to the secondary lock base under the action of the external force, so that the secondary bolt switches between the locked state and the unlocked state relative to the secondary lock base; and
when the battery pack is in the locked state, the primary locking member is located in the primary cavity and abuts against the primary bolt, the secondary locking member is located in the secondary cavity and forms a gap with the secondary bolt, and the gap is configured to restrict the secondary locking member from leaving the secondary cavity.

In the embodiment, with the gap, the secondary bolt only limits the secondary locking member, instead of locking the secondary locking member. When the battery pack needs to be switched from the locked state to the unlocked state, under the action of the unlocking mechanism, for example, an unlocking ejector rod acts on the primary lock link and the secondary lock link at the same time, so as to eject the lock links upwards directly, and thus limitation to the secondary locking member is released. Since the primary locking member abuts against the primary bolt, the unlocking ejector rod cannot directly eject the primary lock link upwards. In this case, the battery pack needs to be driven to move in a direction facing away from the primary bolt under the action of a battery swap apparatus, so that a certain distance is formed between the primary locking member and the primary bolt. The unlocking ejector rod can eject the primary lock link upwards at the moment of forming the distance. Moreover, the secondary bolt forms the gap with the secondary locking member without contact. Accordingly, the secondary locking member is unlikely to damage the secondary bolt in the use process, and the secondary bolt is unlikely to be impacted and rubbed, so that stable reliability of the secondary locking mechanism is ensured, and safety and stability of the electric vehicle are greatly improved.

Preferably, the gap is not less than 2 mm and not greater than a radius of the secondary locking member.

In the embodiment, the gap is set within the above range, so that the secondary locking member can be prevented from sliding out of the secondary cavity from the gap when the secondary locking member needs to be limited, while a limiting operation can be conveniently released in time when limitation to the secondary locking member needs to be released. Thus, stability and reliability of limitation to the secondary locking member are ensured.

Preferably, the secondary locking mechanism further includes a connection seat, and the connection seat is mounted on the support body and spaced apart from the secondary lock base; the secondary lock link is provided with a first end and a second end in a length direction, the first end of the secondary lock link is connected to the secondary bolt, and the second end of the secondary lock link is connected to the connection seat; and the connection seat is configured to allow the first end of the secondary lock link to rotate relative to the secondary lock base.

In the embodiment, the connection seat may connect the second end of the secondary lock link to the support body, and simultaneously assist the secondary lock link in rotating relative to the lock base, so that the secondary locking member is limited or limitation to the secondary locking member is released.

Preferably, the connection seat and the secondary lock base have a same structure.

In the embodiment, with the above structural arrangement, the connection seat and the secondary lock base have the same structure, so that a supporting and limiting effect on the battery pack is ensured. Correspondingly, an application range of the lock base is expanded, and a cost is saved on.

Preferably, the secondary locking mechanism further includes a connection bolt, the connection bolt is connected to the connection seat, and the second end of the secondary lock link is connected to the connection bolt; and
the connection bolt and the secondary bolt have a same structure.

In the embodiment, with the above structural arrangement, the two ends of the secondary lock link have a same structure. Thus, the supporting and limiting effect on the battery pack is further ensured, and locking synchronization of the primary locking mechanism and the secondary locking mechanism is ensured simultaneously.

Preferably, one side of the primary lock link facing the primary lock base is provided with a primary unlocking portion extending and protruding outwards, and one side of the secondary lock link facing the secondary lock base is provided with a secondary unlocking portion extending and protruding outwards; and the primary unlocking portion and the secondary unlocking portion are configured to allow abutment of an unlocking mechanism to drive the corresponding primary lock link and secondary lock link to move and drive the corresponding primary bolt and secondary bolt to perform unlocking, respectively.

In the embodiment, with the above structural arrangement, unlocking is convenient, and unlocking efficiency of the battery pack is improved.

Preferably, one ends of the primary lock base, the secondary lock base, and the connection seat are connected to the support body, and another ends thereof extend to the portion below the support body; the primary opening is provided at a lower portion of the primary lock base, and the primary opening and the primary cavity penetrate the primary lock base in an axial direction of the primary locking member; and secondary openings are provided at lower portions of the secondary lock base and the connection seat, and the secondary opening and the secondary cavity penetrate the secondary lock base in the axial direction of the secondary locking member.

In the embodiment, the battery pack is fixed to the electric vehicle through the support body, the primary opening and the secondary openings are provided at the lower portions, and the battery pack enters the corresponding cavity through the opening at the lower portion, so as to be locked in the cavity, avoiding entering the cavity from a side surface of the cavity. Thus, the locking member can be prevented from sliding out from one side of the cavity, and locking safety of the battery pack can be improved.

Preferably, the quick-swap support further includes a support seat, wherein the support seat is arranged on the support body and spaced apart from the primary locking mechanism and the secondary locking mechanism; and
the support seat is provided with a support opening and a support cavity extending from the support opening, and the support opening is configured to allow a tertiary locking member mounted on the battery pack to enter into the support cavity to support the tertiary locking member.

In the embodiment, the support seat can reliably support the battery pack through the tertiary locking member, so that the battery pack is further reliably mounted on the support body.

Preferably, one end of the support seat is connected to the support body, another end thereof extends to the portion below the support body, the support opening is provided at a lower portion of the support seat, and the support opening and the support cavity penetrate the support seat in the axial direction of the tertiary locking member.

In the embodiment, the battery pack is fixed to the electric vehicle through the support body, the support opening is provided at the lower portion, and the battery pack enters the corresponding cavity through the support opening at the lower portion, so as to be supported after the tertiary locking member is supported in the support cavity. Accordingly, the battery pack can be prevented from entering the support cavity from a side surface of the support cavity, and the tertiary locking member can be prevented from sliding out from one side of the support cavity. The battery pack can be stably supported, and locking safety of the battery pack can be further improved.

Preferably, the quick-swap support further includes a baffle assembly, wherein the baffle assembly at least includes a baffle, the baffle is connected to at least one end of the support body in a length direction of the electric vehicle, one end of the baffle is connected to the support body, and another end of the baffle extends to an outer side of the support body.

In the embodiment, the quick-swap support is provided with the baffle at least at one end, in the length direction of the electric vehicle, of the support body, so that muddy water on wheels of the electric vehicle can be prevented from splashing to the battery pack mounted on the quick-swap support and located behind the baffle. Accordingly, disturbance of the battery pack by foreign matter can be effectively prevented, the battery pack can be effectively protected, and locking stability of the battery pack and the quick-swap support can be improved.

Preferably, the quick-swap support further includes a guard plate, wherein the guard plate is connected to the at least one end of the support body in a width direction of the electric vehicle.

In the embodiment, the locking mechanism can be shielded by arranging the guard plate, so that foreign matter can be prevented from entering the locking mechanism, the locking mechanism on the support body can be effectively protected, and locking stability can be improved.

Preferably, a first location hole is formed at one side of the support body close to a head portion of the electric vehicle, a second location hole is formed at one side of the support body close to a tail portion of the electric vehicle, and the first location hole and the second location hole are configured to allow insertion of a location pin on a battery swap apparatus from below to above.

In the embodiment, the first location hole and the second location hole matching the location pin on the battery swap apparatus are provided on the support body, so that aligned location and relative fixation of the battery swap apparatus and the support body can be realized. The battery swap apparatus is not dislocated relative to the support body during battery swap, and smooth disassembly and assembly of the battery pack on the quick-swap support are ensured.

Preferably, the support body includes a transverse beam, a longitudinal beam, and a upright column, the longitudinal beam extends in the length direction of the electric vehicle, the longitudinal beam is fixed to the vehicle beam of the electric vehicle, the transverse beam is connected to the longitudinal beam through the upright column, a rectangular frame is defined by connecting the longitudinal beam, the upright column, and the transverse beam in sequence, and the upright column is provided with the corresponding first location hole or second location hole; and

wherein the primary locking mechanism and the secondary locking mechanism are arranged on the longitudinal beams.

In the embodiment, interference between the location pins inserted and parts on the transverse beams and the longitudinal beams can be avoided by providing the first location holes and the second location holes on the corresponding upright columns.

Preferably, a lower surface of the upright column at one end close to the tail portion of the electric vehicle is higher than a lower surface of the upright column at one end close to the head portion of the electric vehicle in a height direction.

In the embodiment, with the above structural arrangement, when the upright columns at the end close to the head portion of the electric vehicle are long, the upright columns at the end close to the tail portion of the electric vehicle are shortened. Thus, interference between the battery pack on the battery swap apparatus and the upright columns caused when the battery pack is mounted on the quick-swap support can be avoided while stable location of the battery swap apparatus and the support body can be ensured.

Preferably, the quick-swap support further includes an adapter, wherein the adapter includes a base and a protrusion portion arranged on the base, one of the base and the protrusion portion is connected to the support body, and another one thereof is connected to the vehicle beam of the electric vehicle.

In the embodiment, a same quick-swap support can be assembled to different types of electric vehicles by selecting adapters having protrusion portions in different heights. Thus, design of one quick-swap support for each type of vehicle is avoided, and universality of the quick-swap support is improved.

Preferably, the quick-swap support further includes a visual identification assembly, wherein the visual identification assembly includes a mounting shelf and a mounting plate, a first end of the mounting shelf is connected to the support body, a second end thereof extends to the outer side of the support body, the mounting plate is connected to an end portion of an end of the mounting shelf extending to the outer side of the support body, and the mounting plate is provided with a visual identification point configured to be identified by a visual apparatus.

In the embodiment, parking location of the electric vehicle can be realized by arranging the visual identification assembly. Location alignment precision of the battery swap apparatus and the electric vehicle can be improved by parking location of the electric vehicle through the visual identification assembly, and a success rate of battery swap can be increased. The mounting plate is firmly mounted on the longitudinal beams through the mounting shelf. Thus, the mounting plate is not dislocated when identified by the visual apparatus on the battery swap apparatus, and location precision of the battery swap apparatus is ensured. The mounting plate is more likely to be identified by the visual apparatus through the vision identification point.

Preferably, the support body at least includes one longitudinal beam, the longitudinal beam extends in the length direction of the electric vehicle, and the longitudinal beam is fixed to the vehicle beam.

The longitudinal beam includes a top plate, a side plate, and a bottom plate that are connected in sequence, the side plate is fixedly connected to the vehicle beam, the top plate and the bottom plate extend outwards from two sides of the side plate in the axial direction of the primary locking member and the secondary locking member, respectively, and the primary locking mechanism and the secondary locking mechanism are arranged on the bottom plate; and
wherein the first end of the mounting shelf is attached to and detachably connected to one side of the top plate facing the bottom plate.

In the embodiment, the first end of the mounting shelf is connected between the top plate and the bottom plate. Thus, a space at a top of the top plate is not occupied, no interference with an external structure arranged at the top of the top plate is caused, and the mounting shelf is protected.

Preferably, the support body further includes a plurality of reinforcing rib plates, the reinforcing rib plates are clamped between the top plate and the bottom plate, and one sides of the reinforcing rib plates facing the side plate are connected to the side plate;
wherein the mounting shelf includes two lateral connection plates oppositely arranged and a transverse connection plate connected between the two lateral connection plates, the transverse connection plate is located at the first end of the mounting shelf, a recess portion is defined by the transverse connection plate and the two lateral connection plates, and the recess portion is configured to accommodate the reinforcing rib plates; end portions of each of the two lateral connection plates is attached to and detachably connected to one side of the top plate facing the bottom plate; and/or,
wherein the transverse connection plate is attached to and detachably connected to one sides of the reinforcing rib plates away from the side plate.

In the embodiment, the transverse connection plate is connected between the two lateral connection plates, and the two separated lateral connection plates are connected into an integral structure, so that the mounting shelf is connected to the longitudinal beam. In addition, the recess portion can avoid the reinforcing rib plates, so that the mounting shelf is connected to the longitudinal beam without influencing a reinforcement effect of the longitudinal beam. In addition, the transverse connection plate is connected to the reinforcing rib plates, so that connection points between the mounting shelf and the longitudinal beam are increased. Thus, reliability of connection between the mounting shelf and the longitudinal beam is improved, and reliability of the visual identification assembly is ensured.

Preferably, the mounting shelf further includes a middle connection plate connected between the two lateral connection plates, the middle connection plate is connected to bottoms portions of the two lateral connection plates, and two ends of the middle connection plate are connected to the transverse connection plate and the mounting plate, respectively.

In the embodiment, the middle connection plate is connected between the lateral connecting plates. Thus, strength of the mounting shelf can also be ensured while stability of the mounting shelf can be improved, so that the reliability of the visual identification assembly can be ensured.

Preferably, each of the two lateral connection plates is an L-shaped structure and includes a horizontal connection portion and a vertical connection portion connected end to end, and two ends of the transverse connection plate are connected between the vertical connection portion of each of the two lateral connection plates; and/or,
wherein a plurality of weight reduction holes are provided on the two lateral connection plates and/or the middle connection plate at intervals.

In the embodiment, the weight reduction holes are provided to reduce a weight of the mounting shelf, so that an overall weight of the quick-swap support is reduced.

Preferably, a bendable portion is further formed at one side of the horizontal connection portions facing away from the vertical connection portion, and the bendable portion is arranged opposite the vertical connection portion and extends from the horizontal connection portion in a direction close to the bottom plate.

In the embodiment, the bendable portions can take a structural reinforcement role for the lateral connection plates. Thus, overall strength of the mounting shelf is improved, and the reliability of the visual identification assembly is ensured.

The present invention further provides an electric vehicle, including a battery pack and the above quick-swap support for an electric vehicle, wherein the battery pack is mounted on a support body.

The present invention has the positive progressive effects as follows:
In the quick-swap support for an electric vehicle, the secondary locking mechanism only limits the secondary locking member, instead of locking the secondary locking member. In a case of failure of the primary locking mechanism, the secondary locking mechanism takes a protection and support role for the battery pack, so as to prevent the battery pack from falling off. Accordingly, the locking reliability of the bolt in the use process is improved, and the battery pack is well protected. In addition, in the process that the battery pack needs to be switched from the locked state to the unlocked state, under the action of the unlocking mechanism, limitation to the secondary locking member may be released by the secondary locking mechanism at first, and then locking on the primary locking member is released by the primary locking mechanism. In the process that the battery pack is switched from the unlocked state to the locked state, locking on the primary locking member by the primary locking mechanism and limitation to the secondary locking member by the secondary locking mechanism are synchronous. Thus, the operation is convenient, and the mounting efficiency and mounting reliability of the battery pack are improved.

### BRIEF DESCRIPTION OF THE DRAWINGS

FIG. 1 is a schematic structural diagram of an entire quick-swap support for an electric vehicle in Embodiment 1 of the present invention;
FIG. 2 is an enlarged schematic structural diagram of portion A in FIG. 1;
FIG. 3 is another schematic structural diagram of an entire quick-swap support for an electric vehicle in Embodiment 1 of the present invention;
FIG. 4 is a schematic structural diagram of part of a quick-swap support for an electric vehicle in Embodiment 1 of the present invention;
FIG. 5 is a schematic structural diagram of a primary locking mechanism of a quick-swap support for an electric vehicle in Embodiment 1 of the present invention;
FIG. 6 is a schematic structural diagram of a secondary locking mechanism of a quick-swap support for an electric vehicle in Embodiment 1 of the present invention;
FIG. 7 is a schematic structural diagram of a visual identification assembly of a quick-swap support for an electric vehicle in Embodiment 1 of the present invention;
FIG. 8 is a schematic structural diagram of an adapter in one direction of a quick-swap support for an electric vehicle in Embodiment 1 of the present invention;
FIG. 9 is a schematic structural diagram of an adapter in another direction of a quick-swap support for an electric vehicle in Embodiment 1 of the present invention;
FIG. 10 is a schematic structural diagram of a support seat of an adapter of a quick-swap support for an electric vehicle in Embodiment 1 of the present invention;
FIG. 11 is a schematic structural diagram showing that a primary locking member is locked by a primary locking mechanism of a quick-swap support for an electric vehicle in Embodiment 1 of the present invention;
FIG. 12 is a schematic structural diagram showing that a secondary locking member is limited by a secondary locking mechanism of a quick-swap support for an electric vehicle in Embodiment 1 of the present invention; and
FIG. 13 is a schematic structural diagram of part of an electric vehicle in Embodiment 1 of the present invention, and shows connection between a quick-swap support and a vehicle beam.

Reference numerals in the figures:
1 quick-swap support; 10 support body; 101 longitudinal beam; 1011 top plate; 1012 side plate; 1013 bottom plate; 102 transverse beam; 103 upright column; 104 reinforcing rib plate; 20 primary locking mechanism; 201 primary cavity; 202 primary lock link; 203 primary lock base; 204 primary bolt; 205 primary opening; 206 primary unlocking portion; 30 secondary locking mechanism; 301 secondary cavity; 302 secondary lock link; 303 secondary lock base; 304 secondary bolt; 305 secondary opening; 306 connection seat; 307 connection bolt; 308 secondary unlocking portion; 40 support seat; 401 support opening; 402 support cavity; 50 baffle; 60 first location hole; 70 second location hole; 80 adapter; 801 base; 802 protrusion portion; 803 avoidance groove; 804 bolt head; 90 visual identification assembly; 901 mounting shelf; 902 mounting plate; 903 lateral connection plate; 9031 horizontal connection portion; 9032 vertical connection portion; 9033 bendable portion; 904 transverse connection plate; 905 recess portion; 906 middle connection plate; 907 weight reduction hole; 2 vehicle beam; 3 primary locking member; and 4 secondary locking member.

### DETAILED DESCRIPTION OF THE EMBODIMENTS

The present invention is described more clearly and fully below with reference to a preferred embodiment and the accompanying drawings.

### Embodiment 1

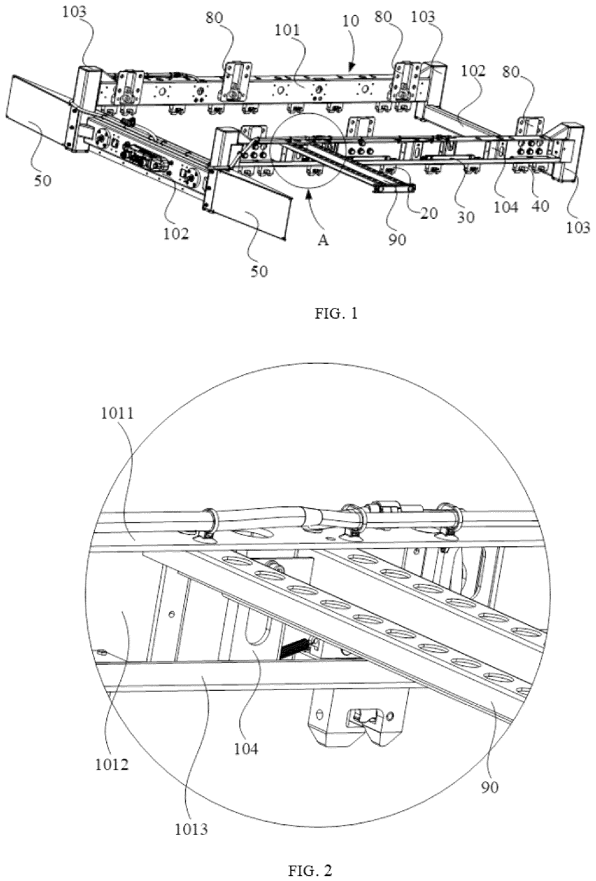

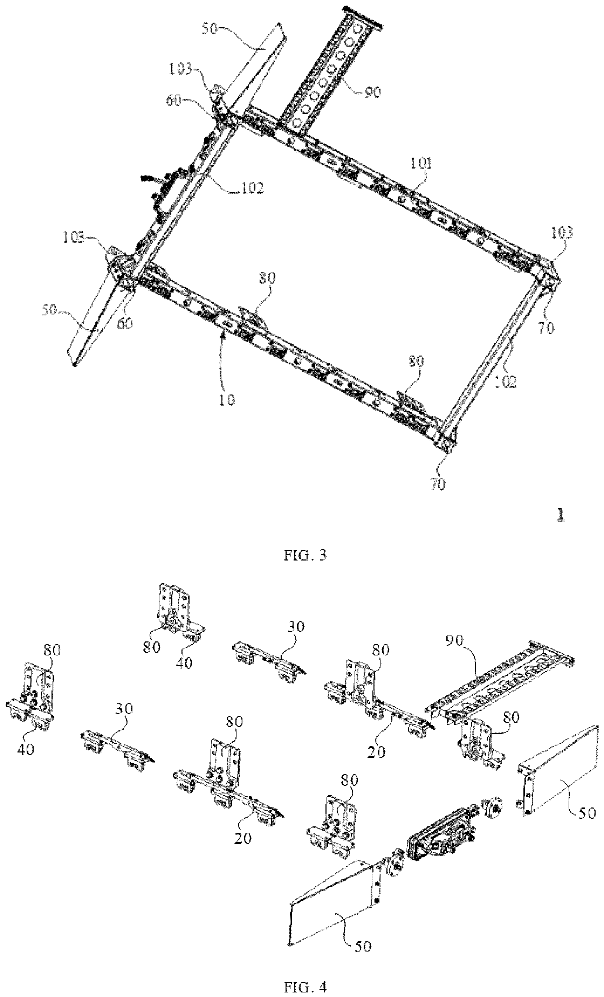

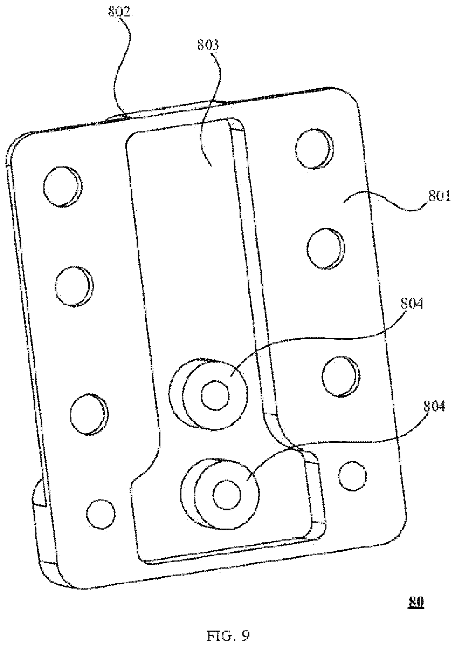

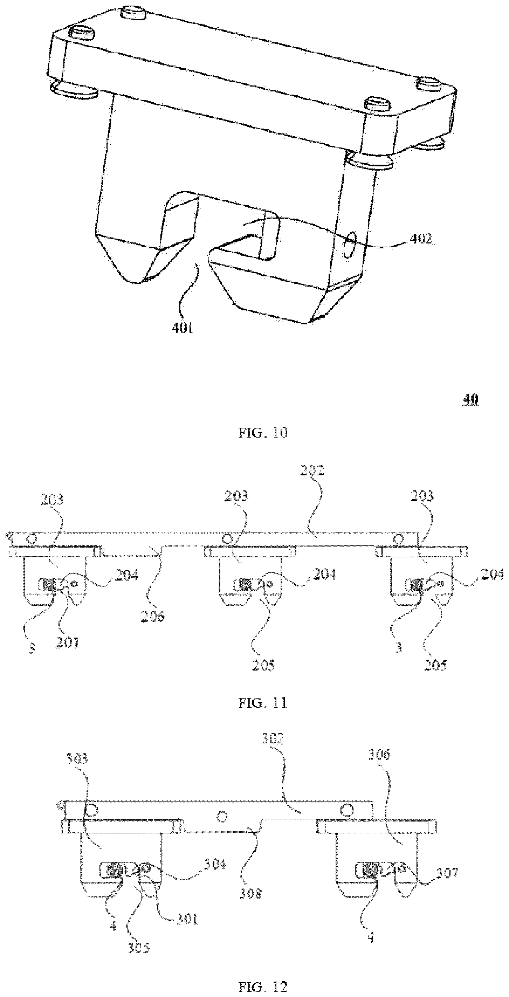

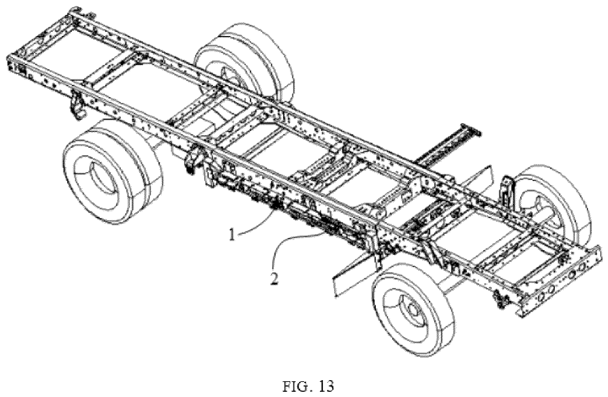

As shown in FIGS. 1-13, a quick-swap support 1 for an electric vehicle, and an electric vehicle are disclosed in the embodiment. The electric vehicle includes a battery pack and the quick-swap support 1 for an electric vehicle. The quick-swap support 1 for an electric vehicle is configured to be fixed to a vehicle beam 2 of the electric vehicle and mount the battery pack.

Specifically, as shown in FIGS. 1-3, the quick-swap support 1 includes a support body 10, a primary locking mechanism 20, and a secondary locking mechanism 30. The support body 10 is fixed to the vehicle beam 2. The primary locking mechanism 20 is arranged on the support body 10 and provided with a primary cavity 201. The secondary locking mechanism 30 is arranged on the support body 10 and spaced apart from the primary locking mechanism 20, and provided with a secondary cavity 301. When the battery pack is in a locked state, a primary locking member 3 is locked in the primary cavity 201 by the primary locking mechanism, and a secondary locking member 4 is limited in the secondary cavity 301. In a process that the battery pack is switched from the locked state to an unlocked state, limitation to the secondary locking member 4 is released by the secondary locking mechanism 30 before locking on the primary locking member 3 is released by the primary locking mechanism 20. In a process that the battery pack is switched from the unlocked state to the locked state, limitation to the secondary locking member 4 by the secondary locking mechanism 30 and locking on the primary locking member 3 by the primary locking mechanism 20 are synchronously performed.

In the embodiment, the secondary locking mechanism 30 only limits the secondary locking member 4, instead of locking the secondary locking member 4. In a case of failure of the primary locking mechanism 20, the secondary locking mechanism 30 takes a protection and support role for the battery pack, so as to prevent the battery pack from falling off. Accordingly, locking reliability of a bolt in a use process is improved, and the battery pack is well protected. In the process that the battery pack needs to be switched from the locked state to the unlocked state, under the action of an unlocking mechanism, limitation to the secondary locking member 4 may be released by the secondary locking mechanism 30 at first, and then locking on the primary locking member 3 is released by the primary locking mechanism 20. Thus, the secondary locking mechanism 30 does not affect an unlocking operation by the primary locking mechanism 20, so that unlocking is smooth and reliable. In the process that the battery pack is switched from the unlocked state to the locked state, locking on the primary locking member 3 by the primary locking mechanism 20 and limitation to the secondary locking member 4 by the secondary locking mechanism 30 are synchronous. Thus, an operation is convenient, and mounting efficiency and mounting reliability of the battery pack are improved.

In a preferred embodiment, as shown in FIGS. 1-6, the primary locking mechanism 20 includes a primary lock link 202, a primary lock base 203, and a primary bolt 204, the primary lock base 203 is mounted on the support body 10 and provided with a primary opening 205 and the primary cavity 201 extending from the primary opening 205, the primary opening 205 is configured to allow the primary locking member 3 to enter into the primary cavity 201, and the primary lock link 202 is configured to drive the primary bolt 204 to move relative to the primary lock base 203 under the action of an external force, so that the primary bolt 204 switches between the locked state and the unlocked state relative to the primary lock base 203. The secondary locking mechanism 30 includes a secondary lock link 302, a secondary lock base 303, and a secondary bolt 304, the secondary lock base 303 is mounted on the support body 10 and provided with a secondary opening 305 and the secondary cavity 301 extending from the secondary opening 305, the secondary opening 305 is configured to allow the secondary locking member 4 to enter into the secondary cavity 301, and the secondary lock link 302 is configured to drive the secondary bolt 304 to move relative to the secondary lock base 303 under the action of the external force, so that the secondary bolt 304 switches between the locked state and the unlocked state relative to the secondary lock base 303. When the battery pack is in the locked state, the primary locking member 3 is located in the primary cavity 201 and abuts against the primary bolt 204, the secondary locking member 4 is located in the secondary cavity 301 and forms a gap with the secondary bolt 304, and the gap is configured to restrict the secondary locking member 4 from leaving the secondary cavity 301.

With the gap, the secondary bolt 304 only limits the secondary locking member 4, instead of locking the secondary locking member 4. When the battery pack needs to be switched from the locked state to the unlocked state, under the action of the unlocking mechanism, for example, an unlocking ejector rod acts on the primary lock link 202 and the secondary lock link 302 at the same time, so as to eject the lock links upwards directly, and thus limitation to the secondary locking member 4 is released. Since the primary locking member 3 abuts against the primary bolt 204, the unlocking ejector rod cannot directly eject the primary lock link 202 upwards. In this case, the battery pack needs to be driven to move in a direction facing away from the primary bolt 204 under the action of a battery swap apparatus, so that a certain distance is formed between the primary locking member 3 and the primary bolt 204. The unlocking ejector rod can eject the primary lock link 202 upwards at the moment of forming the distance. Moreover, the secondary bolt 304 forms the gap with the secondary locking member 4 without contact. Accordingly, the secondary locking member 4 is unlikely to damage the secondary bolt 304 in the use process, and the secondary bolt 304 is unlikely to be impacted and rubbed, so that stable reliability of the secondary locking mechanism 30 is ensured, and safety and stability of the electric vehicle are greatly improved.

In a preferred embodiment, the gap is not less than 2 mm and not greater than a radius of the secondary locking member 4. The gap is set within the above range, so that the secondary locking member 4 can be prevented from sliding out of the secondary cavity 301 from the gap (in other words, the secondary locking member 4 can be reliably limited in the secondary cavity 301) when the secondary locking member 4 needs to be limited, while a limiting operation can be conveniently released in time when limitation to the secondary locking member 4 needs to be released. Thus, stability and reliability of limitation to the secondary locking member 4 are ensured.

In a preferred embodiment, the secondary locking mechanism 30 further includes a connection seat 306, and the connection seat 306 is mounted on the support body 10 and spaced apart from the secondary lock base 303; the secondary lock link 302 is provided with a first end and a second end in a length direction, the first end of the secondary lock link 302 is connected to the secondary bolt 304, and the second end of the secondary lock link 302 is connected to the connection seat 306; and the connection seat 306 is configured to allow the first end of the secondary lock link 302 to rotate relative to the secondary lock base 303.

In the embodiment, the connection seat 306 may connect the second end of the secondary lock link 302 to the support body 10, and simultaneously assist the secondary lock link 302 in rotating relative to the secondary lock base 303, so that the secondary locking member 4 is limited or limitation to the secondary locking member 4 is released.

In a preferred embodiment, the connection seat 306 and the secondary lock base 303 have a same structure. The connection seat 306 and the secondary lock base 303 have the same structure, so that a supporting and limiting effect on the battery pack is ensured. Correspondingly, an application range of the secondary lock base 303 is expanded, and a cost is saved on.

In a preferred embodiment, the secondary locking mechanism 30 further includes a connection bolt 307, the connection bolt 307 is connected to the connection seat 306, and the second end of the secondary lock link 302 is connected to the connection bolt 307; and
the connection bolt 307 and the secondary bolt 304 have a same structure.

It should be noted that, in the embodiment, as shown in FIGS. 1-6, in the primary locking mechanism 20, the primary lock link 202 is connected to three primary lock bases 203; and in the secondary locking mechanism 30, the secondary lock link 302 is connected to one secondary lock base 303 and one connection seat 306. The connection seat 306 and the connection bolt 307 preferably have same structures as the secondary lock base 303 and the connection bolt 307 respectively.

In the embodiment, with the above structural arrangement, the two ends of the secondary lock link 302 have a same structure. Thus, the supporting and limiting effect on the battery pack is further ensured, and locking synchronization of the primary locking mechanism 20 and the secondary locking mechanism 30 is ensured simultaneously.

In other alternative embodiments, the connection seat 306 may be configured to be of any suitable structure, as long as the secondary lock link 302 can drive the secondary bolt 304 to rotate reliably relative to the secondary lock base 303.

In addition, it should be noted that structural members connected to the secondary lock link 302 of the secondary locking mechanism 30 may also include two or more secondary lock bases 303 and/or two or more connection seats 306, which is not specifically limited herein. The cost can be reduced on the basis of reliably limiting the battery pack by providing one secondary lock base 303 and one connection seat 306.

Similarly, as shown in FIGS. 1-6, in a preferred embodiment, one side of the primary lock link 202 facing the primary lock base 203 is provided with a primary unlocking portion 206 extending and protruding outwards, and one side of the secondary lock link 302 facing the secondary lock base 303 is provided with a secondary unlocking portion 308 extending and protruding outwards; and the primary unlocking portion 206 and the secondary unlocking portion 308 are configured to allow abutment of an unlocking mechanism to drive the corresponding primary lock link 202 and secondary lock link 302 to move and drive the corresponding primary bolt 204 and secondary bolt 304 to perform unlocking, respectively. In the embodiment, with the above structural arrangement, unlocking is convenient, and unlocking efficiency of the battery pack is improved.

Further, it should be noted that, the quick-swap support 1 with the primary locking mechanism 20 and the secondary locking mechanism 30 in the above embodiments can be implemented alone in practical application, which is not specifically limited in the above embodiments.

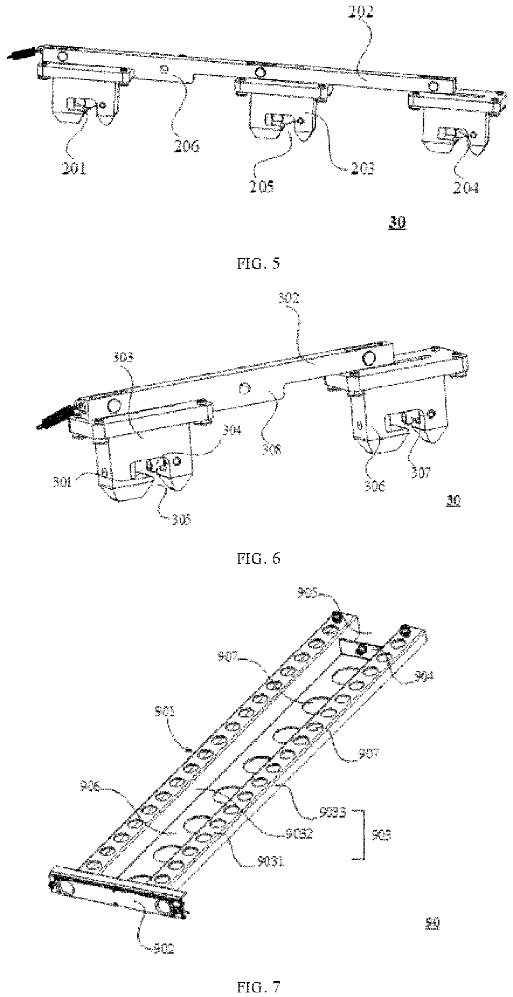

In a preferred embodiment, similarly, as shown in FIG. 6, one ends of the primary lock base 203, the secondary lock base 303, and the connection seat 306 are connected to the support body 10, and another ends thereof extend to the portion below the support body 10; the primary opening 205 is provided at a lower portion of the primary lock base 203, and the primary opening 205 and the primary cavity 201 penetrate the primary lock base 203 in an axial direction of the primary locking member 3; and secondary openings 305 are provided at lower portions of the secondary lock base 303 and the connection seat 306, and the secondary opening 305 and the secondary cavity 301 penetrate the secondary lock base 303 in the axial direction of the secondary locking member 4.

In the embodiment, the battery pack is fixed to the electric vehicle through the support body 10, the primary opening 205 and the secondary openings 305 are provided at the lower portions, and the battery pack enters the corresponding cavity through the opening at the lower portion, so as to be locked in the cavity, avoiding entering the cavity from a side surface of the cavity. Thus, the locking member can be prevented from sliding out from one side of the cavity, and locking safety of the battery pack can be improved.

In the embodiment, for facilitating disassembly, assembly, and maintenance, the primary lock base 203, the secondary lock base 303, and the connection seat 306 are detachably connected to the support body 10 separately. It should be noted that, in other alternative embodiments, in order to improve mounting strength and stability, the primary lock base 203, the secondary lock base 303, the connection seat 306, and the support body 10 or may be integrally formed. Alternatively, parts of the primary lock base 203, the secondary lock base 303, and the connection seat 306, and the support body 10 may be integrally formed, which is not specifically limited in the embodiment.

In order to reliably support the battery pack, so as to further reliably mount the battery pack on the support body 10, as shown in FIGS. 1-4 and 10, the quick-swap support 1 further includes a support seat 40, wherein the support seat 40 is arranged on the support body 10 and spaced apart from the primary locking mechanism 20 and the secondary locking mechanism 30. Specifically, the support seat 40 is provided with a support opening 401 and a support cavity 402 extending from the support opening 401, and the support opening 401 is configured to allow a tertiary locking member mounted on the battery pack to enter into the support cavity 402 to support the tertiary locking member.

Similar to the above primary lock base 203, secondary lock base 303, and connection seat 306, in a preferred embodiment, one end of the support seat 40 is connected to the support body 10, another end thereof extends to the portion below the support body 10, the support opening 401 is provided at a lower portion of the support seat 40, and the support opening 401 and the support cavity 402 penetrate the support seat 40 in the axial direction of the tertiary locking member.

Correspondingly, in the embodiment, the support seat 40 is mounted on the support body 10 through a connection structure. In other alternative embodiments, the support seat 40 and the support body 10 are integrally formed. The battery pack is fixed to the electric vehicle through the support body 10, the support opening 401 is provided at the lower portion, and the battery pack enters the corresponding cavity through the support opening 401 at the lower portion, so as to be supported after the tertiary locking member is supported in the support cavity 402. Accordingly, the battery pack can be prevented from entering the support cavity 402 from a side surface of the support cavity 402, and the tertiary locking member can be prevented from sliding out from one side of the support cavity 402. The battery pack can be stably supported, and locking safety of the battery pack can be further improved.

Further preferably, the primary lock base 203, the secondary lock base 303, the connection seat 306, and the support seat 40 have the same structure. Thus, an application range of the lock bases can be expanded, and a cost can be saved on.

Furthermore, it should be noted that the primary locking member 3, the secondary locking member 4, and the tertiary locking member are locking shafts connected to the battery pack. All the locking shafts are generally located at a same height relative to the battery pack. Accordingly, the primary lock base 203, the secondary lock base 303, the connection seat 306, and the support seat 40 are also preferably located at the same height relative to the support body 10.

Further, it should be noted that the primary locking mechanism 20, the secondary locking mechanism 30, and the support seat 40 in the above embodiments can be implemented alone in practical application, which is not specifically limited in the above embodiments.

In a preferred embodiment, as shown in FIGS. 1-3, the quick-swap support 1 further includes a baffle assembly, wherein the baffle assembly at least includes a baffle 50, the baffle 50 is connected to at least one end of the support body 10 in a length direction of the electric vehicle, one end of the baffle 50 is connected to the support body 10, and another end of the baffle 50 extends to an outer side of the support body 10.

The quick-swap support 1 is provided with the baffle 50 at least at one end, in the length direction of the electric vehicle, of the support body 10, so that muddy water on wheels of the electric vehicle can be prevented from splashing to the battery pack mounted on the quick-swap support 1 and located behind the baffle 50. Accordingly, disturbance of the battery pack by foreign matter can be effectively prevented, the battery pack can be effectively protected, and locking stability of the battery pack and the quick-swap support 1 can be improved.

It should be noted that FIGS. 1 and 3-4 in the embodiment merely show that one end close to a vehicle head is provided with the baffle 50.

Further, the baffle 50 is inclined in a direction extending outwards towards a direction away from a head portion of the electric vehicle or a direction away from a tail portion of the electric vehicle. The baffle 50 is configured to be inclined backwards. Accordingly, foreign matter falling on the baffle 50 can slide down quickly, instead of being deposited on the baffle 50, while wind resistance can be reduced.

It should be noted that the quick-swap support 1 with the baffle assembly in the above embodiments can be implemented alone in practical application, which is not specifically limited in the above embodiments.

In a preferred embodiment, as shown in FIGS 1-3, a first location hole 60 is formed at one side of the support body 10 close to the head portion of the electric vehicle, a second location hole 70 is formed at one side of the support body 10 close to the tail portion of the electric vehicle, and the first location hole 60 and the second location hole 70 are configured to allow insertion of a location pin on a battery swap apparatus from below to above.

In the embodiment, the first location holes 60 and the second location holes 70 matching the location pins on the battery swap apparatus are provided on the support body 10, so that aligned location and relative fixation of the battery swap apparatus and the support body 10 can be realized. The battery swap apparatus is not dislocated relative to the support body 10 during battery swap, and smooth disassembly and assembly of the battery pack on the quick-swap support 1 are ensured.

In a preferred embodiment, one of the first location hole 60 and the second location hole 70 is a circular hole, and another one is a kidney-shaped hole. In the embodiment, front location holes and rear location holes of the support body 10 are the circular holes and the kidney-shaped holes respectively. The kidney-shaped holes can facilitate quick alignment between the location pins and the location holes, so that alignment efficiency can be improved, and over-location between the battery swap apparatus and the quick-swap support 1 for an electric vehicle can be avoided. The circular holes can fix the location pins inserted therein relatively, so that dislocation deviation can be avoided, and location alignment precision can be ensured.

In a preferred embodiment, the support body 10 includes a transverse beam 102, a longitudinal beam 101, and a upright column 103, the longitudinal beam 101 extends in the length direction of the electric vehicle, the longitudinal beams 101 is fixed to the vehicle beam 2 of the electric vehicle, the transverse beam 102 is connected to the longitudinal beam 101 through the upright column 103, a rectangular frame is defined by connecting the longitudinal beam 101, the upright column 103, and the transverse beam 102 in sequence, and the upright column 103 is provided with the corresponding first location hole 60 or second location hole 70; and
the primary locking mechanism 20 and the secondary locking mechanism 30 are arranged on the longitudinal beams 101.

In the embodiment, interference between the location pins inserted and parts on the transverse beams 102 and the longitudinal beams 101 can be avoided by providing the first location holes 60 and the second location holes 70 on the corresponding upright columns 103.

In a preferred embodiment, a lower surface of the upright column 103 at one end close to the tail portion of the electric vehicle is higher than a lower surface of the upright column 103 at one end close to the head portion of the electric vehicle in a height direction.

In the embodiment, with the above structural arrangement, when the upright columns 103 at the end close to the head portion of the electric vehicle are long, the upright columns 103 at the end close to the tail portion of the electric vehicle are shortened. Thus, interference between the battery pack on the battery swap apparatus and the upright columns 103 caused when the battery pack is mounted on the quick-swap support 1 can be avoided while stable location of the battery swap apparatus and the support body 10 can be ensured.

Specifically, as shown in FIGS. 1-3, in the embodiment, the location holes located on the upright columns 103 at the end close to the head portion of the electric vehicle are the kidney-shaped first location holes 60. The location holes located on the upright columns 103 at the end close to the tail portion of the electric vehicle are the circular second location holes 70. In other alternative embodiments, the location holes located on the upright columns 103 at the end close to the head portion of the electric vehicle or may be configured as the circular holes, and the location holes located on the upright columns 103 at the end close to the tail portion of the electric vehicle or may be configured as the kidney-shaped holes, which is not specifically limited in the embodiment.

It should be noted that the quick-swap support 1 with the location holes, and the quick-swap support 1 with front upright columns and rear upright columns in different heights in the above embodiments can be implemented alone in practical application, which is not specifically limited in the above embodiments.

In a preferred embodiment, as shown in FIGS. 1-4, 8, and 9, the quick-swap support 1 further includes an adapter 80, wherein the adapter 80 includes a base 801 and a protrusion portion 802 arranged on the base 801, one of the base 801 and the protrusion portion 802 is connected to the support body 10, and another one thereof is connected to the vehicle beam 2 of the electric vehicle. A same quick-swap support 1 can be assembled to different types of electric vehicles by selecting adapters 80 having protrusion portions 802 in different heights. Thus, design of one quick-swap support 1 for each type of vehicle is avoided, and universality of the quick-swap support 1 is improved.

In a preferred embodiment, an avoidance groove 803 is provided at an opposite side of the adapter 80 corresponding to the protrusion portion 802, the avoidance groove 803 is recessed towards a protrusion direction of the protrusion portion 802, and a mounting hole penetrating a surface of the protrusion portion 802 is provided in the avoidance groove 803.

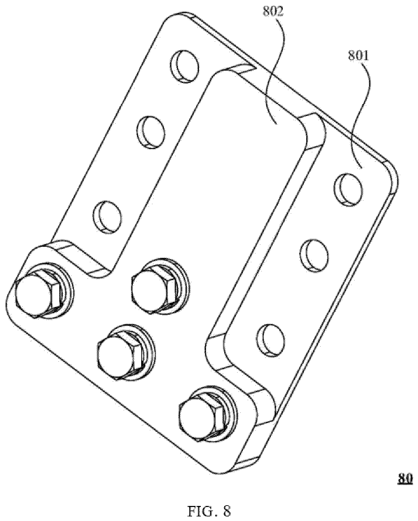

The protrusion portion 802 and the avoidance groove 803 are provided in the adapter 80, so that an accommodation space for a bolt head can be reserved. Accordingly, the bolt head 804 can be accommodated in the avoidance groove 803, without interference with the vehicle beam 2. As shown in FIGS. 8-9, two bolt heads 804 are located in the avoidance groove 803.

It should be noted that as shown in FIGS. 1 and 3-4, the quick-swap support 1 in the embodiment is provided with six adapters 80, three adapters 80 are arranged on each side of the quick-swap support 1, and the adapters on two sides are arranged oppositely. The protrusion portion 802 is connected to the support body 10, and the base 801 is connected to the vehicle beam 2 of the electric vehicle.

It should be noted that the quick-swap support 1 with the adapter 80 in the above embodiments can be implemented alone in practical application, which is not specifically limited in the above embodiments.

In a preferred embodiment, as shown in FIGS. 1-4 and 7, the quick-swap support 1 further includes a visual identification assembly 90, wherein the visual identification assembly 90 includes a mounting shelf 901 and a mounting plate 902, a first end of the mounting shelf 901 is connected to the support body 10, a second end thereof extends to the outer side of the support body 10, the mounting plate 902 is connected to an end portion of an end of the mounting shelf 901 extending to the outer side of the support body 10, and the mounting plate 902 is provided with a visual identification point configured to be identified by a visual apparatus. Parking location of the electric vehicle can be realized by arranging the visual identification assembly 90. Location alignment precision of the battery swap apparatus and the electric vehicle can be improved by parking location of the electric vehicle through the visual identification assembly 90, and a success rate of battery swap can be increased. The mounting plate 902 is firmly mounted on the longitudinal beams 101 through the mounting shelf 901. Thus, the mounting plate 902 is not dislocated when identified by the visual apparatus on the battery swap apparatus, and location precision of the battery swap apparatus is ensured. The mounting plate 902 is more likely to be identified by the visual apparatus through the vision identification point.

In a preferred embodiment, the longitudinal beam 101 of the support body 10 includes a top plate 1011, a side plate 1012, and a bottom plate 1013 that are connected in sequence, the side plate 1012 is fixedly connected to the vehicle beam 2, the top plate 1011 and the bottom plate 1013 extend outwards from two sides of the side plate 1012 in the axial direction of the primary locking member 3 and the secondary locking member 4 respectively, and the primary locking mechanism 20 and the secondary locking mechanism 30 are arranged on the bottom plate 1013; and the first end of the mounting shelf 901 is attached to and detachably connected to one side of the top plate 1011 facing the bottom plate 1013.

In the embodiment, the first end of the mounting shelf 901 is connected between the top plate 1011 and the bottom plate 1013. Thus, a space at a top of the top plate 1011 is not occupied, no interference with an external structure arranged at the top of the top plate 1011 is caused, and the mounting shelf 901 is protected.

In a preferred embodiment, the support body 10 further includes a plurality of reinforcing rib plates 104, the reinforcing rib plates 104 are clamped between the top plate 1011 and the bottom plate 1013, and one sides of the reinforcing rib plates 104 facing the side plate 1012 are connected to the side plate 1012. The mounting shelf 901 includes two lateral connection plates 903 oppositely arranged and a transverse connection plate 904 connected between the two lateral connection plates 903, the transverse connection plate 904 is located at the first end of the mounting shelf 901, a recess portion 905 is defined by the transverse connection plate and the two lateral connection plates, and the recess portion 905 is configured to accommodate the reinforcing rib plates 104; and end portions of each of the two lateral connection plates 903 is attached to and detachably connected to one side of the top plate 1011 facing the bottom plate 1013. In a further preferred embodiment, the transverse connection plate 904 is attached to and detachably connected to one sides of the reinforcing rib plates 104 away from the side plate 1012.

The transverse connection plate 904 is connected between the two lateral connection plates 903, and the two separated lateral connection plates 903 are connected into an integral structure, so that the mounting shelf 901 is connected to the longitudinal beam 101. In addition, the recess portion 905 can avoid the reinforcing rib plates 104, so that the mounting shelf 901 is connected to the longitudinal beam 101 without influencing a reinforcement effect of the longitudinal beam 101. In addition, the transverse connection plate 904 is connected to the reinforcing rib plates 104, so that connection points between the mounting shelf 901 and the longitudinal beam 101 are increased. Thus, reliability of connection between the mounting shelf 901 and the longitudinal beam 101 is improved, and reliability of the visual identification assembly 90 is ensured.

In a preferred embodiment, the mounting shelf 901 further includes a middle connection plate 906 connected between the two lateral connection plates 903, the middle connection plate 906 is connected to bottom portions of the two lateral connection plates 903, and two ends of the middle connection plate 906 are connected to the transverse connection plate 904 and the mounting plate 902 respectively. The middle connection plate 906 is connected between the lateral connecting plates 903. Thus, strength of the mounting shelf 901 can be ensured while stability of the mounting shelf 901 can be improved, so that the reliability of the visual identification assembly 90 can be ensured.

In a preferred embodiment, each of the two lateral connection plates 903 is an L-shaped structure and includes a horizontal connection portion 9031 and a vertical connection portion 9032 connected end to end, and two ends of the transverse connection plate 904 are connected between the vertical connection portion 9032 of each of the two lateral connection plates 903.

In a preferred embodiment, as shown in FIGS. 1-3 and 7, in order to reduce a weight of the mounting shelf 901, in favor of reduction of an overall weight of the quick-swap support 1, a plurality of weight reduction holes 907 are provided on the two lateral connection plate 903 and/or the middle connection plate 906 at intervals. Specifically, the plurality of weight reduction holes 907 are provided on the horizontal connection portions 9031 and/or the middle connection plate 906.

In a preferred embodiment, a bendable portion 9033 is further formed at one side of the horizontal connection portion 9031 facing away from the vertical connection portion 9032, and the bendable portion 9033 is arranged opposite the vertical connection portion 9032 and extends from the horizontal connection portion 9031 in a direction close to the bottom plate 1013. The bendable portions 9033 can take a structural reinforcement role for the lateral connection plates 903. Thus, overall strength of the mounting shelf 901 is improved, and the reliability of the visual identification assembly 90 is ensured.

Parking location of the electric vehicle can be realized by arranging the visual identification assembly 90. The visual apparatus is arranged on an outer wall of a chamber of the battery swap station, and preset battery swap positions are arranged on a driving passage of the battery swap station. The electric vehicle and the battery swap apparatus perform a battery swap operation at the preset battery swap position. For ease of parking, the electric vehicle can perform the battery swap operation when parked within a preset parking range. After obtaining the position of the electric vehicle by identifying the visual identification assembly 90, the visual apparatus can determine whether the electric vehicle is parked within the preset parking range conveniently. If the electric vehicle is parked within the preset parking range, the battery swap operation can be performed. If the electric vehicle is not parked within the preset parking range, the battery swap operation can be performed by adjusting the position of the electric vehicle or a parking position of the battery swap apparatus for mutual alignment. Parking location of the electric vehicle is realized by arranging the visual identification assembly 90, so that the location alignment precision of the battery swap apparatus and the electric vehicle can be improved, and the success rate of battery swap can be increased. The mounting plate 902 is firmly mounted on the longitudinal beam 101 through the mounting shelf 901. Thus, the mounting plate 902 is not dislocated when identified by the visual apparatus on the battery swap apparatus, and location precision of the battery swap apparatus is ensured. The mounting plate 902 is more likely to be identified by the visual apparatus through the vision identification point.

The visual identification assembly 90 further includes a fixing plate and an identification label; the fixing plate is connected to the mounting plate 902, and a through hole is formed on the fixing plate; the identification label is provided with a reflective coating capable of being identified by the visual apparatus; and the identification label is bonded to the mounting plate 902, and the identification label corresponds to the through hole, so as to form the visual identification point at the through hole.

Mounting stability of the identification label can be improved by arranging the fixing plate, and the fixing plate is configured to press against an edge of the identification label, preventing the identification label from falling off. The fixing plate is provided with the through hole for exposing the identification label, so that the identification label can be identified by the visual apparatus. The identification label is provided with the reflective coating capable of being identified by the visual apparatus, so as to be easily identified by the visual apparatus.

The visual identification assembly 90 is electrically connected to a control unit of the battery swap station. The control unit stores a reference image. The visual identification assembly 90 transmits a real-time image identified to the control unit, and the control unit compares the reference image with the real-time image. If an error rate is within a predetermined range, the electric vehicle is parked within the preset parking range. The control unit sends a battery swap instruction, and the battery swap station initiates a conventional battery swap process. If an error rate exceeds a predetermined range after result comparison, the electric vehicle is not parked within the preset parking range. The control unit correspondingly sends out an adjustment instruction, so as to correspondingly adjust the position of the electric vehicle or the parking position of the battery swap apparatus for mutual alignment, and then the battery swap operation is performed.

It should be noted that the visual identification assembly 90, and the quick-swap support 1 with the visual identification assembly 90 in the above embodiments can be implemented alone in practical application, which is not specifically limited in the above embodiments.

Further, it should be noted that "detachably connected" mentioned in the embodiments can be implemented through a bolt, a rivet, etc.

### Embodiment 2

A quick-swap support 1 in the embodiment is substantially identical to the quick-swap support 1 in embodiment 1, and is different in that:
the quick-swap support 1 further includes a guard plate (not shown in the figures), wherein the guard plate is connected to at least one end, in a width direction of the electric vehicle, of the support body 10. The same reference numerals in the embodiment as those in embodiment 1 indicate the same elements.

Specifically, the guard plate is located above the locking mechanisms. The corresponding locking mechanisms/locking mechanism (the primary locking mechanism 20 and/or the secondary locking mechanism 30) can be shielded by arranging the guard plate. Accordingly, foreign matter can be prevented from entering the locking mechanism, the locking mechanism on the support body 10 can be effectively protected, and locking stability can be improved.

One end of the guard plate is connected to the support body 10, and the guard plate extends towards the outside of the support body 10, and gradually inclines downwards in an extension direction. After the guard plate inclines downwards, the foreign matter falling on the baffle 50 can slide down quickly, effectively preventing the foreign matter from accumulating on an upper surface of the guard plate.

In other embodiments, the guard plate may extend horizontally, instead of inclination. The guard plate may extend and cover an entire longitudinal beam 101 of the quick-swap support 1, or may cover only part of the longitudinal beam 101.

The guard plate can shield the locking mechanism, thereby improve locking stability. The inclined guard plate can prevent impurities from accumulating on the upper surface of the guard plate.

In a preferred embodiment, lower edges of the guard plates are not lower than a lower surface of the locking mechanism or a lower surface of the longitudinal beam 101 of the quick-swap support 1.

Specifically, in order to prevent the inclined guard plates from interfering in entry or exit of the battery pack to and from a bottom of the electric vehicle and engagement between the battery pack and the locking mechanism, when a distance between outer edges of two guard plates at two sides is less than a width of the battery pack, the lower edges of the guard plates are not lower than the lower surface of the longitudinal beam 101 of the quick-swap support 1. Accordingly, the guard plates can avoid interfering in entry and exit of the battery pack to and from the bottom of the electric vehicle and the engagement between the battery pack and the locking mechanism. When a distance between outer edges of two guard plates at two sides is greater than a width of the battery pack, the lower edges of the guard plates are not lower than the lower surface of the locking mechanism. Accordingly, the guard plates can avoid interfering in entry and exit of the battery pack to and from the bottom of the electric vehicle and the engagement between the battery pack and the locking mechanism.

Further, it should be noted that the quick-swap support 1 in the above embodiments can be implemented alone in practical application, which is not specifically limited in the above embodiments.

Although specific embodiments of the present invention have been described above, it should be understood by those skilled in the art that this is merely for illustrative description, and the scope of protection of the present invention is defined by the appended claims. Those skilled in the art can make various changes or modifications to these embodiments without departing from the principles and essence of the present invention, but these changes and modifications fall within the scope of protection of the present invention.

## Claims

1. A quick-swap support for an electric vehicle, configured to be fixed to a vehicle beam of the electric vehicle and mount a battery pack, comprising:
a support body, fixed to the vehicle beam;
a primary locking mechanism, arranged on the support body and provided with a primary cavity; and
a secondary locking mechanism, arranged on the support body and spaced apart from the primary locking mechanism, and provided with a secondary cavity;
wherein when the battery pack is in a locked state, a primary locking member is locked in the primary cavity by the primary locking mechanism, and a secondary locking member is limited in the secondary cavity;
wherein in a process that the battery pack is switched from the locked state to an unlocked state, limitation to the secondary locking member is released by the secondary locking mechanism before locking on the primary locking member is released by the primary locking mechanism; and
wherein in a process that the battery pack is switched from the unlocked state to the locked state, limitation to the secondary locking member by the secondary locking mechanism and locking on the primary locking member by the primary locking mechanism are synchronously performed.

2. The quick-swap support for an electric vehicle according to claim 1, wherein the primary locking mechanism comprises a primary lock link, a primary lock base, and a primary bolt, the primary lock base is mounted on the support body and provided with a primary opening and the primary cavity extending from the primary opening, the primary opening is configured to allow the primary locking member to enter into the primary cavity, and the primary lock link is configured to drive the primary bolt to move relative to the primary lock base under the action of an external force, so that the primary bolt switches between the locked state and the unlocked state relative to the primary lock base;
wherein the secondary locking mechanism comprises a secondary lock link, a secondary lock base, and a secondary bolt, the secondary lock base is mounted on the support body and provided with a secondary opening and the secondary cavity extending from the secondary opening, the secondary opening is configured to allow the secondary locking member to enter into the secondary cavity, and the secondary lock link is configured to drive the secondary bolt to move relative to the secondary lock base under the action of the external force, so that the secondary bolt switches between the locked state and the unlocked state relative to the secondary lock base; and
wherein when the battery pack is in the locked state, the primary locking member is located in the primary cavity and abuts against the primary bolt, the secondary locking member is located in the secondary cavity and forms a gap with the secondary bolt, and the gap is configured to restrict the secondary locking member from leaving the secondary cavity.

3. The quick-swap support for an electric vehicle according to claim 2, wherein the gap is not less than 2mm and not greater than a radius of the secondary locking member.

4. The quick-swap support for an electric vehicle according to any one of claim 2 or 3, wherein the secondary locking mechanism further comprises a connection seat, and the connection seat is mounted on the support body and spaced apart from the secondary lock base; the secondary lock link is provided with a first end and a second end in a length direction, the first end of the secondary lock link is connected to the secondary bolt, and the second end of the secondary lock link is connected to the connection seat; and the connection seat is configured to allow the first end of the secondary lock link to rotate relative to the secondary lock base.

5. The quick-swap support for an electric vehicle according to claim 4, wherein the connection seat and the secondary lock base have a same structure.

6. The quick-swap support for an electric vehicle according to claim 5, wherein the secondary locking mechanism further comprises a connection bolt, the connection bolt is connected to the connection seat, and the second end of the secondary lock link is connected to the connection bolt; and
wherein the connection bolt and the secondary bolt have a same structure.

7. The quick-swap support for an electric vehicle according to any one of claims 2-6, wherein one side of the primary lock link facing the primary lock base is provided with a primary unlocking portion extending and protruding outwards, and one side of the secondary lock link facing the secondary lock base is provided with a secondary unlocking portion extending and protruding outwards; and the primary unlocking portion and the secondary unlocking portion are configured to allow abutment of an unlocking mechanism to drive the corresponding primary lock link and secondary lock link to move and drive the corresponding primary bolt and secondary bolt to perform unlocking, respectively.

8. The quick-swap support for an electric vehicle according to any one of claims 4-6, wherein one ends of the primary lock base, the secondary lock base, and the connection seat are connected to the support body, and another ends thereof extend to a portion below the support body; the primary opening is provided at a lower portion of the primary lock base, and the primary opening and the primary cavity penetrate the primary lock base in an axial direction of the primary locking member; and secondary openings are provided at lower portions of the secondary lock base and the connection seat, and the secondary opening and the secondary cavity penetrate the secondary lock base in the axial direction of the secondary locking member.

9. The quick-swap support for an electric vehicle according to any one of claims 1-8, further comprising a support seat, wherein the support seat is arranged on the support body and spaced apart from the primary locking mechanism and the secondary locking mechanism; and
wherein the support seat is provided with a support opening and a support cavity extending from the support opening, and the support opening is configured to allow a tertiary locking member mounted on the battery pack to enter into the support cavity to support the tertiary locking member.

10. The quick-swap support for an electric vehicle according to claim 9, wherein one end of the support seat is connected to the support body, another end thereof extends to the portion below the support body, the support opening is provided at a lower portion of the support seat, and the support opening and the support cavity penetrate the support seat in the axial direction of the tertiary locking member.

11. The quick-swap support for an electric vehicle according to any one of claims 1-10, further comprising a baffle assembly, wherein the baffle assembly at least comprises a baffle, the baffle is connected to at least one end of the support body in a length direction of the electric vehicle, one end of the baffle is connected to the support body, and another end of the baffle extends to an outer side of the support body.

12. The quick-swap support for an electric vehicle according to any one of claims 1-11, further comprising a guard plate, wherein the guard plate is connected to the at least one end of the support body in a width direction of the electric vehicle.

13. The quick-swap support for an electric vehicle according to any one of claims 1-12, wherein a first location hole is formed at one side of the support body close to a head portion of the electric vehicle, a second location hole is formed at one side of the support body close to a tail portion of the electric vehicle, and the first location hole and the second location hole are configured to allow insertion of a location pin on a battery swap apparatus from below to above;
preferably, the support body comprises a transverse beam, a longitudinal beam, and a upright column, wherein the longitudinal beam extends in the length direction of the electric vehicle, the longitudinal beam is fixed to the vehicle beam of the electric vehicle, the transverse beam is connected to the longitudinal beam through the upright column, a rectangular frame is defined by connecting the longitudinal beam, the upright column, and the transverse beam in sequence, and the upright column is provided with the corresponding first location hole or the second location hole; and
wherein the primary locking mechanism and the secondary locking mechanism are arranged on the longitudinal beam.

14. The quick-swap support for an electric vehicle according to claim 13, wherein a lower surface of the upright column at one end close to the tail portion of the electric vehicle is higher than a lower surface of the upright column at one end close to the head portion of the electric vehicle in a height direction.

15. The quick-swap support for an electric vehicle according to any one of claims 1-14, further comprising an adapter, wherein the adapter comprises a base and a protrusion portion arranged on the base, one of the base and the protrusion portion is connected to the support body, and another one thereof is connected to the vehicle beam of the electric vehicle.

16. The quick-swap support for an electric vehicle according to any one of claims 1-15, further comprising a visual identification assembly, wherein the visual identification assembly comprises a mounting shelf and a mounting plate, a first end of the mounting shelf is connected to the support body, a second end thereof extends to the outer side of the support body, the mounting plate is connected to an end portion of an end of the mounting shelf extending to the outer side of the support body, and the mounting plate is provided with a visual identification point configured to be identified by a visual apparatus;
preferably, the support body at least comprises a longitudinal beam, the longitudinal beam extends in the length direction of the electric vehicle, and the longitudinal beam is fixed to the vehicle beam;
wherein the longitudinal beam comprises a top plate, a side plate, and a bottom plate that are connected in sequence, the side plate is fixedly connected to the vehicle beam, the top plate and the bottom plate extend outwards from two sides of the side plate in the axial direction of the primary locking member and the secondary locking member, respectively, and the primary locking mechanism and the secondary locking mechanism are arranged on the bottom plate; and
wherein the first end of the mounting shelf is attached to and detachably connected to one side of the top plate facing the bottom plate.

17. The quick-swap support for an electric vehicle according to claim 16, wherein the support body further comprises a plurality of reinforcing rib plates, the reinforcing rib plates are clamped between the top plate and the bottom plate, and one sides of the reinforcing rib plates facing the side plate are connected to the side plate;
wherein the mounting shelf comprises two lateral connection plates oppositely arranged and a transverse connection plate connected between the two lateral connection plates, the transverse connection plate is located at the first end of the mounting shelf, a recess portion is defined by the transverse connection plate and the two lateral connection plates, and the recess portion is configured to accommodate the reinforcing rib plates; end portions of each of the two lateral connection plates is attached to and detachably connected to one side of the top plate facing the bottom plate; and/or
wherein the transverse connection plate is attached to and detachably connected to one sides of the reinforcing rib plates away from the side plate.

18. The quick-swap support for an electric vehicle according to claim 17, wherein the mounting shelf further comprises a middle connection plate connected between the two lateral connection plates, the middle connection plate is connected to bottom portions of the two lateral connection plates, and two ends of the middle connection plate are connected to the transverse connection plate and the mounting plate, respectively.

19. The quick-swap support for an electric vehicle according to claim 18, wherein each of the two lateral connection plates is an L-shaped structure and comprises a horizontal connection portion and a vertical connection portion connected end to end, and two ends of the transverse connection plate are connected between the vertical connection portion of each of the two lateral connection plates; and/or
wherein a plurality of weight reduction holes are provided on the two lateral connection plates and/or the middle connection plate at intervals; and
preferably, a bendable portion is further formed at one side of the horizontal connection portion facing away from the vertical connection portion, and the bendable portion is arranged opposite the vertical connection portion and extends from the horizontal connection portion in a direction close to the bottom plate.

20. An electric vehicle, comprising the battery pack and the quick-swap support for an electric vehicle according to any one of claims 1-19, wherein the battery pack is mounted on the support body.
